# EUROPEAN PATENT SPECIFICATION

(11) **EP 0 802 038 B1**
(45) Date of publication and mention of the grant of the patent: **03.11.1999**
(21) Application number: 96830222.4
(22) Date of filing: 19.04.1996
(51) Int. Cl.: B29D 29/06, B29C 53/28, B29C 65/04, B65G 15/46

(54) **A method and apparatus for manufacturing a conveyor belt with undulated side walls**
Verfahren und Vorrichtung zum Herstellen eines Fördergurtes mit gewellten Seitenwänden
Procédé et dispositif pour la fabrication d'une courroie de convoyeur pourvue de bords ondulés

(43) Date of publication of application: 22.10.1997
(73) Proprietor: CHIORINO S.p.A., 13051 Biella (IT)
(72) Inventor: Borri, Giorgio, 13051 Biella Chiavazza (Biella) (IT); Brasolin, Lauro, 13050 Valle San Nicolao (Biella) (IT)
(74) Representative: Saconney, Piero

(56) References cited:
- DE-A- 2 847 137
- FR-A- 1 142 218
- FR-A- 1 444 143
- FR-A- 2 307 647
- FR-E- 89 743
- GB-A- 910 425
- SU-A- 1 404 143
- US-A- 2 556 011
- US-A- 2 642 918
- US-A- 3 010 866
- US-A- 4 218 274
- PATENT ABSTRACTS OF JAPAN vol. 95, no. 002 & JP 07 032484 A (NITTA IND CORP), 3 February 1995,
- PATENT ABSTRACTS OF JAPAN vol. 007, no. 240 (M-251), 25 October 1983 & JP 58 128814 A (MIKI:KK), 1 August 1983,
- PATENT ABSTRACTS OF JAPAN vol. 010, no. 092 (M-468), 9 April 1986 & JP 60 230830 A (KUINRAITO DENSHI SEIKOU KK;OTHERS: 01), 16 November 1985,

## Description

The present invention relates to a method for the manufacture of a conveyor belt having corrugated walls according to the precharacterising part of claim 1 and to an apparatus for the manufacture of conveyor belts according to the precharacterising part of claim 5. Conveyor belts of this type comprise at least one containment wall which projects in a substantially perpendicular direction from the surface of the belt. In conveyor belts of this type - see e.g. FR-A-89 743 or FR-A-1 444 143 -, the wall has a corrugated profile in order to enable the belt to be wound onto return rollers.

Conveyor belts having integral walls are widely used because they solve efficiently the problem of the lateral containment of the material to be transported. The walls of plastics material, which are integral with the belt, replace the stationary metallic walls of conveyor devices of the old type and have many advantages, above all in applications intended for the food industry, given that the belt with integral walls can be readily washed and does not have gaps in which bacteria could collect.

The present invention relates to a method and an apparatus for the manufacture of conveyor belts having corrugated walls, in which a strip is intended to form the walls and to be fixed to a belt.

FR-A-89 743 discloses a method for manufacture of a conveyor belt having corrugated walls, comprising a step of shaping a strip of plastics material into a corrugated profile, in which successive portions of the strip are fixed onto the surface of the belt by means of separate fixing steps.

FR-A-1 444 143 discloses an apparatus for the manufacture of conveyor belts provided with corrugated walls, comprising a preliminary shaping station for imparting continuously a corrugated profile to a strip of plastics material, which is intended to form the wall, and a fixing station in which the successive portions of the pre-shaped strip are butt welded onto the surface of a conveyor belt.

DE-A-2 847 137 refers to a method in which a strip is continuously corrugated by mechanical means and butt connected by a compression force to a base belt, the unit formed by the strip and the belt being subjected to a vulcanising process in another station for connecting the two elements between each other.

Other method means or measures related to the connection or shaping of plastics components are disclosed in GB-A-910 425, JP-A-60-230 830, SU-A-1 404 143 and US-A-2 556 011.

In particular the present invention is aimed at reducing the time and costs involved in the manufacture of conveyor belts of the known type.

According to the present invention, this object is achieved by a method and an apparatus according to claim 1 and claim 5 respectively.

The innovative idea on which the present invention is based consists substantially in carrying out a continuous preliminary shaping operation on a strip of plastics material which is intended to form the wall or walls of the conveyor belt. The aim of the preliminary shaping operation is to impart a corrugated profile to the strip of plastics material, which substantially facilitates the subsequent step in which various portions of the continuous pre-shaped strip are welded onto the surface of the belt by means of separate welding steps, which are preferably carried out by means of a high-frequency welding system.

The present invention will now be described in detail with reference to the appended drawings which are provided purely by way of non-limiting example and in which:
- Figure 1 is a diagrammatic perspective view of a conveyor belt having corrugated walls;
- Figure 2 is a diagrammatic perspective view of a preliminary shaping station;
- Figure 3 is a diagrammatic plan view of the preliminary shaping station;
- Figure 4 is a diagrammatic perspective view illustrating the stage of welding the pre-shaped strip onto a conveyor belt;
- Figure 5 is a diagrammatic cross-section illustrating the welding step ; and
- Figure 6 is a partial perspective view illustrating a portion of the conveyor belt indicated by the arrow VI in Figure 1.

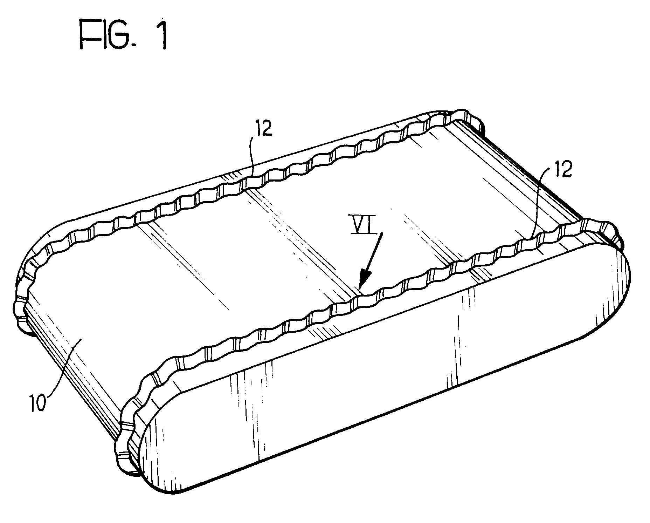

In Figure 1 is indicated with 10 an endless conveyor belt equipped with a pair of side walls 12 which have a corrugated profile and project in a substantially perpendicular direction from the external surface of the conveyor belt 10.

The conveyor belt 10 is produced in accordance with a technique known per se and is formed by a textile reinforcing core incorporated in a matrix of plastics material, preferably based on polyurethane. The side walls 12 have a corrugated profile in order to enable the conveyor belt 10 to be wound onto return rollers (not shown) without causing stresses or breakings in the radially external portion of the walls.

The walls 12 are formed from a strip of plastics material which is identical with, or which can be connected by welding to, the plastics material forming the covering of the conveyor belt 10.

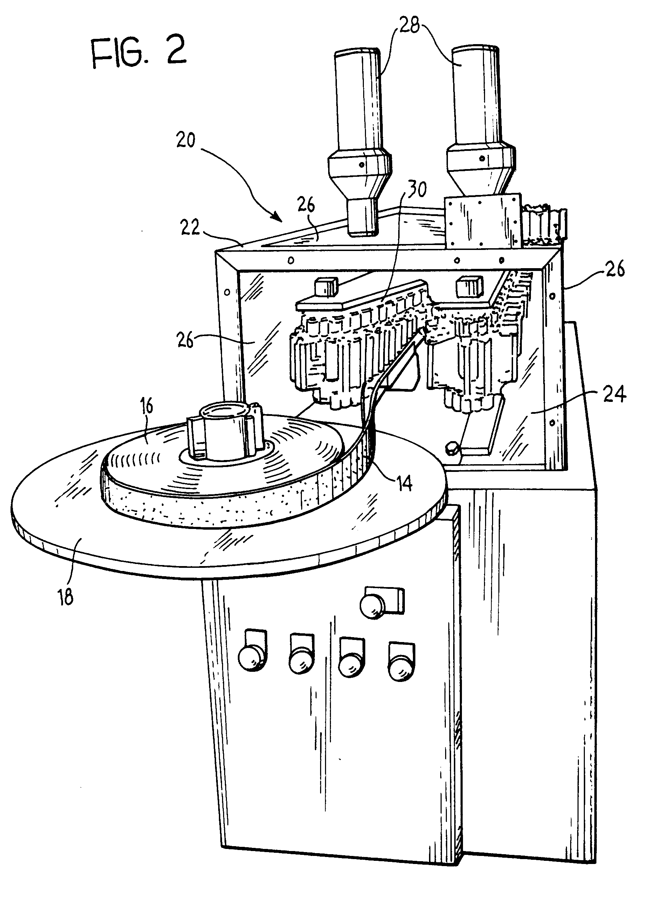

With reference to Figures 2 and 3, 14 indicates a smooth strip of plastics material which is intended to form a corrugated wall 12. The strip 14 is obtained by techniques of extrusion and, optionally, cutting known per se and is gathered into a reel 16 supported in such a manner that it can rotate freely on a plate 18.

The smooth strip 14 is caused to pass continuously through a preliminary shaping station 20 which comprises a housing 22 of a generally parallelepipedal shape. The housing 22 is closed along four faces constituted by the base 24 and by three side walls 26. The housing 22 is completely or at least partially open on the remaining two end faces which are used as the inlet for the smooth strip 14 and as the outlet for the pre-shaped strip.

Heating means 28 send a thermostatically controlled flow of hot air into the housing 22 in order to maintain, in the shaping region enclosed by the housing 22, a temperature that is substantially equal to the plasticising temperature of the plastics material forming the strip 14, for example of the order of from 115 to 125°C.

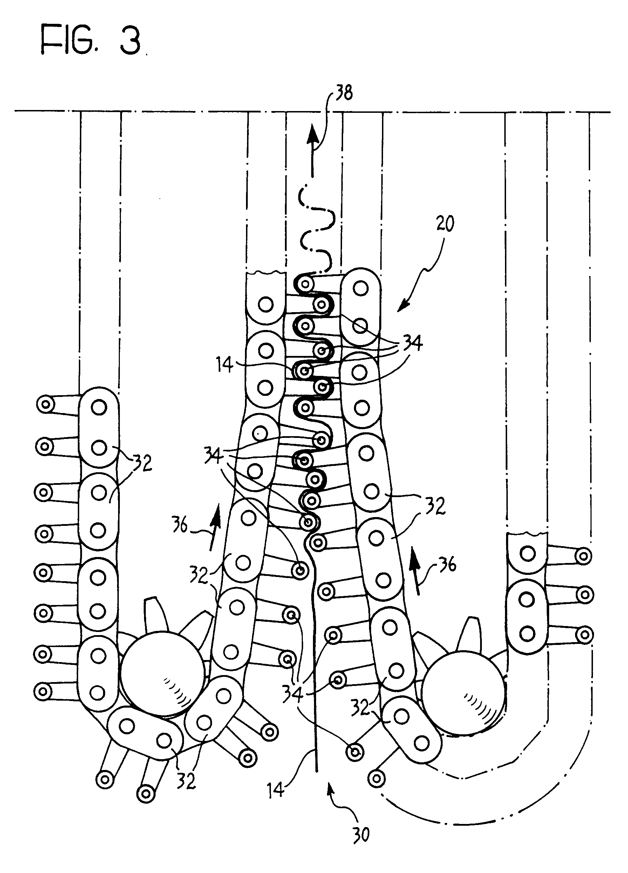

The inside of the housing 22 accommodates a continuously operating shaping device 30 which comprises a pair of counter-rotating endless drive members 32 formed, for example, by chains. Each drive member 32 carries a series of shaping elements 34 which are formed, for example, by pins and which can exercise a shaping action in the direction perpendicular to the strip 14. The path of the drive members 32 is such that, at the mouth of the shaping device 30, the shaping elements 34 are at a distance from one another and they mutually and gradually mesh as they proceed in the direction indicated by the arrows 36 in Figure 3.

As shown in Figure 3, the mutual meshing of the opposing shaping members 34 forces the smooth strip 14 gradually to assume a corrugated profile. The movement of the drive members 32 also causes the strip 14 to advance continuously through the device 30, in the direction indicated by the arrow 38 in Figure 3.

As the pre-shaped strip gradually moves away from the region of the housing 22 in which the heating means 28 are arranged, it cools down and maintains in a relatively stable manner the corrugated profile imparted to it by the shaping device 30. At the outlet of the preliminary shaping station 20, the corrugated strip is collected and transferred to a welding station.

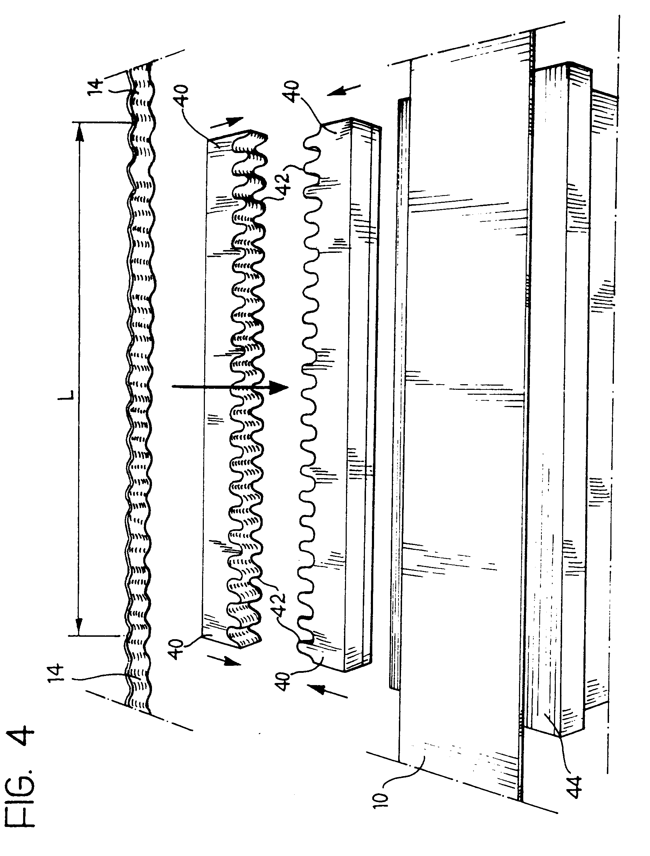

Referring now to Figures 4, 5 and 6, after the continuous preliminary shaping of the strip 14 has been carried out as described above, successive portions of the pre-shaped continuous strip 14 are welded onto the conveyor belt 10 in the following manner.

As illustrated in Figure 4, a portion of length L of the pre-shaped continuous strip 14 is placed between a pair of positioning members 40 provided with respective corrugated surfaces 42 which, in use, hold the strip portion L between them. The positioning members 40 are supported on the upper surface of the conveyor belt 10 which is in its turn supported on a welding table 44. The strip 14 is welded to the belt 10 portion by portion: after a first portion of length L has been welded in a manner which will be described hereinafter, the conveyor belt 10 is advanced on the welding table 44, a new portion of strip is positioned between the members 40 and welded and this sequence is repeated until the completion of a wall which is closed on itself to form a ring. In the preferred embodiment of the present invention, the welding of the individual portions of the continuous strip 14 is carried out by high-frequency welding.

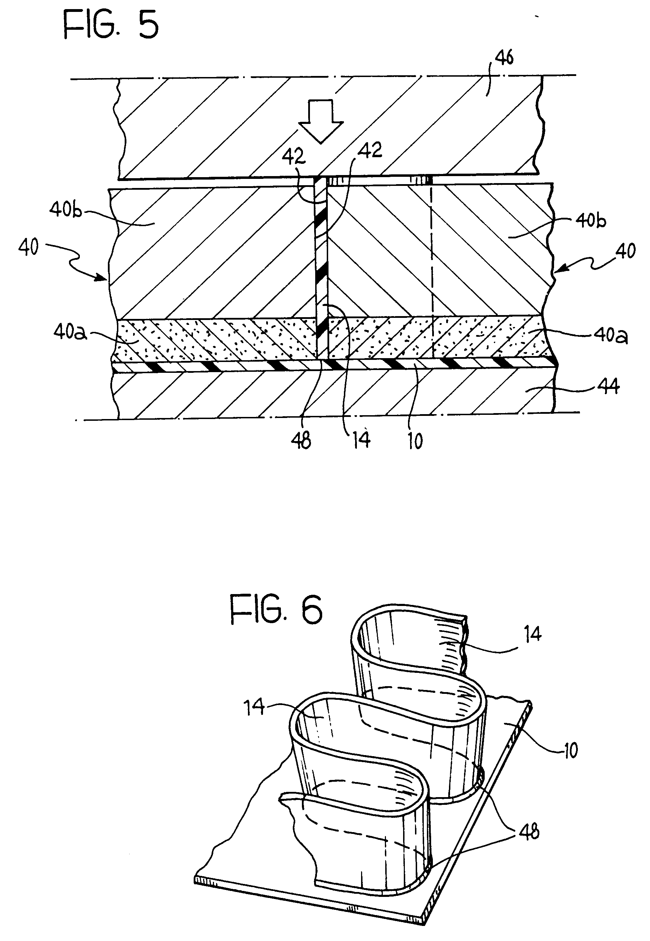

As shown in Figure 5, the positioning members 40 and the portion of strip 14 locked between them are arranged between two electrodes of a high-frequency welding apparatus. The lower electrode is formed by the table 44 on which the belt 10 is supported, while the upper electrode 46 is movable between an inoperative raised position and an operative lowered position illustrated in Figure 5. The lower portion of the positioning members 40, indicated in Figure 5 by 40a, is formed by plastics material, while the upper portion 40b is formed from metallic material, at least in the area of the corrugated surfaces 42. In order to carry out the welding operation, the strip 14 is pressed against the belt 10 by the upper electrode 46 and, at the same time, the two electrodes 44, 46 are supplied with radio-frequency alternating voltage which brings about the welding of the strip 14 to the belt 10 in the region of mutual contact indicated 48.

Figure 6 shows the strip 14 and the belt 10 at the end of the welding step. As was mentioned above, the welding operation is repeated for successive portions of the continuous strip 14 until the corrugated wall is completely closed on itself. Before the last portion is welded, the strip is cut to size, the head is joined to the tail and then the strip is placed between the positioning members 40 and welded.

## Claims

1. A method for the manufacture of a conveyor belt having corrugated walls, in which a strip (14) is intended to form the walls and to be fixed to a belt (10), characterised in that it comprises the following sequence of subsequent operations:
- subjecting a strip of plastics material (14) to a continuous preliminary hot shaping step in order that the strip (14) takes on a corrugate profile,
- cooling the corrugated strip (14) so that its corrugated profile be maintained in a relatively stable manner,
- bringing a portion of predetermined length (L) of the stabilised corrugated strip (14) close to the surface of the belt (10),
- performing discontinuously a butt welding step in order to fix an edge of said portion of the stabilised corrugated strip (14) to the belt (10),
- repeating the sequence of bringing a portion of predetermined length (L) of the stabilised corrugated strip (14) close to the surface of the belt (10) and performing a respective butt welding step, until each corrugated wall of the belt (10) is completed.

2. A method according to Claim 1, characterised in that, during the butt welding steps, each portion (L) of the pre-shaped continuous strip (14) is placed between two positioning members (40) located between two electrodes (44, 46) of a high-frequency welding system.

3. A method according to Claim 2, characterised in that the positioning members (40) are provided with support surfaces (42) which have corrugate profiles complementary to one another and which, in use, hold between them the portion of strip to be welded.

4. A method according to Claim 1, characterised in that the preliminary shaping step is carried out by causing a smooth strip (14) to pass continuously through a shaping region, at least part of which is heated, and by exercising a shaping action in opposing directions on the walls of the strip (14) by means of shaping elements (34) which can be moved together with the strip (14) through the shaping region.

5. An apparatus for the manufacture of conveyor belts provided with corrugated walls, in which a strip is intended to form the corrugated walls and to be fixed to a belt (10), characterised in that it comprises in combination a preliminary hot shaping station (20) for imparting continuously a corrugated profile to a strip (14) of plastics material which is intended to form a wall, so that the corrugated profile of the strip (14) be maintained in a relatively stable manner outside the preliminary hot shaping station (20), and a butt welding station, separated from said preliminary hot shaping station (20), in which portions of predetermined length (L) of the stabilised pre-shaped continuous strip (14) are butt welded discontinuously, portion by portion, onto the surface of a conveyor belt (10).

6. An apparatus according to Claim 5, characterised in that the butt welding station comprises a pair of positioning members (40) which can hold between them a portion of pre-shaped strip (L) and which are to be positioned between two electrodes (44, 46) of a high-frequency welding system.

7. An apparatus according to Claim 6, characterised in that the positioning members (40) are provided with support surfaces (42) which have corrugated profiles complementary to one another and which, in use, hold between them the portion of strip to be welded.

8. An apparatus according to Claim 5, characterised in that the preliminary hot shaping station (20) comprises heating means (28) which can send a flow of heating air into a housing (22) which accommodates a shaping device (30) comprising a pair of counter-rotating endless drive members (32), each of which is equipped with a plurality of shaping elements (34) which can impart a shaping action in the direction perpendicular to the strip (14).

## Patentansprüche

1. Verfahren zur Herstellung eines Förderbandes mit gewellten Seitenwänden, bei dem ein Streifen (14) zur Bildung der Wände und zum Befestigen an dem Förderband (10) vorgesehen ist, **dadurch gekennzeichnet**, daß es die folgende Abfolge von aufeinanderfolgenden Schritten umfaßt:
- Aussetzen des Streifens aus Kunststoff (14) einer kontinuierlichen Vor-Warmverformung, damit der Streifen (14) ein gewelltes Profil erhält,
- Abkühlen des gewellten Streifens (14), sodaß dessen gewellte Profil in einem relativ stabilen Zustand gehalten wird,
- Heranbringen eines Abschnittes mit vorbestimmter Länge (L) des stabilisierten gewellten Streifens (14) nahe an die Oberfläche des Förderbandes (10),
- Durchführung einer diskontinuierlichen Stumpf-Schweißung, um eine Kante dieses Abschnittes des stabilisierten gewellten Streifens (14) an dem Förderband (10) zu fixieren,
- Wiederholen der Sequenz des Heranbringens eines Abschnittes mit vorbestimmten Länge (L) des stabilisierten gewellten Streifens (14) an die Oberfläche des Förderbandes (10) und Durchführung einer entsprechenden Stumpf-Schweißung bis jede der gewellten Wände des Förderbandes (10) vollständig ist.

2. Verfahren nach Anspruch 1, **dadurch gekennzeichnet**, daß während der Stumpf-Schweißungs-Schritte jeder Abschnitt (L) des vorgeformten durchgehenden Streifens (14) zwischen zwei Positionier-Teilen (40) plaziert wird, die zwischen zwei Elektroden (44, 46) eines Hochfrequenz-Schweiß-Systems angeordnet sind.

3. Verfahren mach Anspruch 2, **dadurch gekennzeichnet**, daß die Positionier-Teile (40) mit Support-Flächen (42) versehen sind, die zueinander komplementäre gewellte Profile aufweisen und zwischen denen der zu verschweißende Abschnitt des Streifens im Betrieb gehalten wird.

4. Verfahren nach Anspruch 1, **dadurch gekennzeichnet**, daß der Schritt des Vor-Formens durch kontinuierliches Hindurchführen eines glatten Streifens (14) durch einen Formungsbereich, von dem zumindest ein Teil beheizt wird, und durch Ausführung der Verformung durch Einwirken von Formungs-Elementen (34) in einander entgegengesetzen Richtungen auf die Wände des Streifens (14) durchgeführt wird, welche Formungs-Elemente (34) zusammen mit dem Streifen (14) durch den Formungsbereich bewegt werden.

5. Einrichtung zur Herstellung von Förderbändern mit gewellten Wänden, in der ein Streifen zur Bildung der gewellten Wände und zum Befestigen an dem Förderband (10) vorgesehen ist, **dadurch gekennzeichnet**, daß die Einrichtung in Kombination eine Vor-Warmformungs-Station (20) zum kontinuierlichen Einarbeiten eine gewellten Profiles in einen Streifen (14) aus Kunststoff, der zur Bildung einer Wand vorgesehen ist, wobei das gewellte Profil des Streifens (14) in einem relativ stabilen Zustand außerhalb der Vor-Warmformungs-Station (20) gehalten wird, und eine Stumpf-Schweiß-Station umfaßt, die von der Vor-Warmformungs-Station (20) getrennt ist, in welcher Stumpf-Schweiß-Station Abschnitte von vorbestimmter Länge (L) des stabilisierten vorgeformten durchgehenden Streifens (14) diskontinuierlich, Abschnitt für Abschnitt, stumpf an die Oberfläche des Förderbandes (10) angeschweißt wird.

6. Einrichtung nach Anspruch 5, **dadurch gekennzeichnet**, daß die Stumpf-Schweiß-Station ein Paar von Positionier-Teilen (40) umfaßt, die zwischen sich einen Abschnitt des vorgeformten Streifens (L) halten können und die zwischen zwei Elektroden (44, 46) eines Hochfrequenz-Schweiß-Systems angeordnet sind.

7. Einrichtung nach Anspruch 6, **dadurch gekennzeichnet**, daß die Postionier-Teile (40) mit Support-Flächen (42) versehen sind, die zueinander komplementäre gewellte Profile aufweisen und die im Betrieb den zu verschweißenden Abschnitt des Streifens zwischen sich halten.

8. Einrichtung nach Anspruch 5, **dadurch gekennzeichnet**, daß die Vor-Warmformungs-Station (20) eine Heizeinrichtung (28) umfaßt, die einen Strom von erwärmter Luft in ein Gehäuse (22) liefert, das eine Formungseinrichtung (30) enthält, die ein Paar von in einander entgegengesetzten Richtungen rotierenden endlosen Antriebseinrichtungen (32) umfaßt, von denen jeder mit einer Vielzahl von Formungselementen (34) versehen ist, die eine Verformung in einer senkrecht zum Streifen (14) verlaufenden Richtung bewirken können.

## Revendications

1. Procédé de fabrication d'une courroie transporteuse ayant des parois ondulées, dans lequel une bande (14) est destinée à former des parois et à être fixée à une courroie (10), caractérisé en ce qu'il comprend la séquence suivante d'opérations successives:
l'application à une bande de matière plastique (14) d'une étape continue préliminaire de mise en forme à chaud afin que la bande (14) prenne un profil ondulé,
le refroidissement de la bande ondulée (14) afin que son profil ondulé soit maintenu d'une manière relativement stable,
la mise d'une partie d'un tronçon prédéterminé (L) de la bande ondulée stabilisée (14) à proximité de la surface de la courroie (10),
l'exécution d'une étape de soudage bout à bout de manière discontinue destinée à la fixation d'un bord de ladite partie de la bande ondulée stabilisée (14) à la courroie (10), et
la répétition de la séquence de mise d'une partie du tronçon prédéterminé (L) de la bande ondulée stabilisée (14) à proximité de la surface de la courroie (10) et d'exécution d'une étape respective de soudage bout à bout, jusqu'à ce que chaque paroi ondulée de la courroie (10) soit terminée.

2. Procédé selon la revendication 1, caractérisé en ce que, pendant les étapes de soudage bout à bout, chaque partie (L) de la bande continue (14) préalablement mise en forme est placée entre deux organes (40) de positionnement disposés entre deux électrodes (44, 46) d'un système de soudage à hautes fréquences.

3. Procédé selon la revendication 2, caractérisé en ce que les organes de positionnement (40) sont munis de surfaces (42) de soudage qui ont des profits ondulés complémentaires mutuellement et qui, pendant l'utilisation, maintiennent entre eux la partie de la bande à souder.

4. Procédé selon la revendication 1, caractérisé en ce que l'étape préliminaire de mise en forme est exécutée par passage continu d'une bande lisse (14) dans une région de mise en forme dont une partie au moins est chauffée, et par exécution d'une action de mise en forme en sens opposés sur les parois de la bande (14) à l'aide d'éléments (34) de mise en forme qui peuvent être déplacés ensemble avec la bande (14) dans la région de mise en forme.

5. Appareil de fabrication de courroies transporteuses ayant des parois ondulées, dans lequel une bande est destinée à former les parois ondulées et à être fixée à une courroie (10), caractérisé en ce qu'il comporte, en combinaison, un poste (20) de mise en forme préliminaire à chaud destiné à donner un profil ondulé de façon continue à une bande (14) de matière plastique destinée à former une paroi, si bien que le profil ondulé de la bande (14) est maintenu d'une manière relativement stable à l'extérieur du poste de mise en forme préliminaire à chaud (20), et un poste de soudage bout à bout, séparé du poste de mise en forme préliminaire à chaud (20) et dans lequel des parties d'un tronçon prédéterminé (L) de la bande continue (14) préalablement mise en forme et stabilisée sont soudées bout à bout de façon discontinue, partie par partie, à la surface d'une courroie transporteuse (10).

6. Appareil selon la revendication 5, caractérisé en ce que le poste de soudage bout à bout comporte deux organes (40) de positionnement qui peuvent maintenir entre eux une partie de la bande (L) préalablement mise en forme et qui sont destinés à être positionnés entre deux électrodes (44, 46) d'un système de soudage à hautes fréquences.

7. Appareil selon la revendication 6, caractérisé en ce que les organes de positionnement (40) possèdent des surfaces (42) de support qui ont des profils ondulés complémentaires mutuellement et qui, pendant l'utilisation, maintiennent entre eux la partie de bande à souder.

8. Appareil selon la revendication 5, caractérisé en ce que le poste de mise en forme préliminaire à chaud (20) comprend un dispositif de chauffage (28) qui permet la transmission d'un courant d'air de chauffage à un boîtier (22) qui loge un appareil (30) de mise en forme comprenant deux organes sans fin d'entraînement (32) tournant en sens inverses, chacun étant équipé de plusieurs éléments (34) de mise en forme qui peuvent assurer une action de mise en forme en direction perpendiculaire à la bande (14).
